# EUROPEAN PATENT APPLICATION

(11) **EP 2 463 497 A1**
(43) Date of publication of application: **13.06.2012**
(21) Application number: 10194610.1
(22) Date of filing: 10.12.2010
(51) Int. Cl.: F02B 37/14, F02B 37/10

(54) **Turbocharger control**

(71) Applicant: Perkins Engines Company Limited, Peterborough Cambridgeshire PE1 5NA (GB)
(72) Inventor: The designation of the inventor has not yet been filed
(74) Representative: Frost, Alex John

(57) **Abstract**

A turbocharger system comprises: a turbocharger having a rotatable shaft arranged to be driven by exhaust gases from an associated engine and coupled to a turbocharger electrical machine; and a controller configured to switch the turbocharger electrical machine between a first mode in which electrical energy is drawn from the turbocharger electrical machine acting as a generator and a second mode in which energy is provided to the turbocharger electrical machine to act as a motor. The controller may be configured to switch between the first mode and the second mode based upon the power factor for the electrical energy generated by or supplied to at least one of: the turbocharger electrical machine; and an engine electrical machine coupled to the associated engine.

## Description

### Technical Field

The disclosure relates to a turbo-charging engine system and a method of operating a turbo-charging engine system, particularly, a system comprising an electric turbo assist turbocharger.

### Background

A turbocharger forms part of an engine, and comprises a turbocharger shaft driven by a turbine that rotates in response to exhaust gases from the engine. The principal purpose of the turbocharger is to compress gases using a compressor for introduction into the engine cylinders (called "boost").

An electric turbo assist (ETA) turbocharger also generates electrical energy through rotation of the shaft. The generated energy can be stored in batteries, used in auxiliary electrical systems or fed to a motor connected to the engine crankshaft to improve engine response. The ETA system provides an additional mechanism to recover energy that might otherwise be lost where the energy in the exhaust gases exceeds what is needed to drive the compressor. The electric machine associated with the turbocharger can alternatively act as a motor instead of a generator to provide additional boost.

Similarly, an electric machine associated with the engine crankshaft can likewise operate as a generator. Where the ETA turbocharger turbine cannot provide sufficient mechanical power to drive the compressor to meet the needs of the engine, the crankshaft can drive its associated electric device as a generator. Power from the generator will drive the electric machine on the turbocharger shaft as a motor, thus providing additional energy to drive the compressor and increase the compressed air flowing to the engine.

Switching the turbocharger electric machine between a motor operation mode and a generator operation mode is a difficulty in the control of turbo-charging engine systems. When the engine receives a load, it will take in more air so as to combust more fuel and deliver the increased power required to meet the load. The turbocharger electrical machine can then be operating in its motor mode to provide additional boost.

Existing systems determine when to switch operating modes on the basis of the engine speed. A drop in engine speed is indicative that a load has been applied, and is noticeable before the increased air and fuel are demanded.

An alternative approach is described in U.S. Pat. No. 4,680,933. A control device for a turbocharger is used with an internal combustion engine. An electric motor is mounted on a common shaft with the turbocharger turbine. The electric motor is switched from motor operation to generator operation as a function of a boost air pressure value or as a function of the engine output. The turbocharger therefore consumes fuel more efficiently.

A difficulty with all these approaches is that the engine is significantly reduced in power before the turbocharger operating mode is switched to provide increased boost when the load is applied. Also, a surge can occur when a large load is removed from the engine, since the reduction in turbocharger speed is not immediate. This cause more compressed air in the system than the engine demands and can stall the turbocharger.

### Summary of the Disclosure

A turbocharger system comprises: a turbocharger having a rotatable shaft arranged to be driven by exhaust gases from an associated engine and coupled to a turbocharger electrical machine; and a controller configured to switch the turbocharger electrical machine between a first mode in which electrical energy is drawn from the turbocharger electrical machine acting as a generator and a second mode in which energy is provided to the turbocharger electrical machine to act as a motor. The controller is configured to switch between the first mode and the second mode based upon the power factor for the electrical energy generated by or supplied to the turbocharger electrical machine.

A turbocharger system, comprises: an engine for driving a load, coupled to an engine electrical machine and arranged to provide exhaust gases; a turbocharger having a rotatable shaft arranged to be driven by the exhaust gases and coupled to a turbocharger electrical machine; and a controller configured to switch the turbocharger electrical machine between a first mode in which electrical energy is drawn from the turbocharger electrical machine acting as a generator and a second mode in which energy is provided to the turbocharger electrical machine to act as a motor. The controller is configured to switch between the first mode and the second mode based upon the power factor for the electrical energy generated by or supplied to at least one of: the engine electrical machine; and the turbocharger electrical machine.

A turbocharger has a rotatable shaft coupled to a turbocharger electrical machine. A method of operating the turbocharger comprises switching between a first mode, in which the rotatable shaft of the turbocharger is driven to rotate, causing the turbocharger electrical machine to act as a generator, such that energy is drawn from the turbocharger electrical machine, and a second mode, in which the turbocharger electrical machine is operated such that energy is provided to the turbocharger electrical machine to act as a motor and drive the rotatable shaft. The switch between the first mode and the second mode is based upon the power factor for the electrical energy generated by or supplied to the turbocharger electrical machine.

A turbocharger system comprises: an engine for driving a load, the engine being coupled to an engine electrical machine; and a turbocharger having a rotatable shaft coupled to a turbocharger electrical machine. A method for operating the turbocharger system comprises: operating the engine and generating exhaust gases thereby, which cause the turbocharger rotatable shaft to rotate; and switching between a first mode, in which the rotatable shaft of the turbocharger is driven to rotate, causing the turbocharger electrical machine to act as a generator, such that energy is drawn from the turbocharger electrical machine, and a second mode, in which the turbocharger electrical machine is operated such that energy is provided to the turbocharger electrical machine to act as a motor and drive the rotatable shaft. The switch between the first mode and the second mode is based upon the power factor for the electrical energy generated by or supplied to at least one of: the engine electrical machine; and the turbocharger electrical machine.

### Brief Description of the Drawings

The turbocharger and method of operating a turbocharger may be put into practice in various ways, one of which will now be described by way of example only and with reference to the accompanying drawings in which:
Figure 1 shows a diagrammatic view of a turbo-charging engine system;
Figure 2 shows a diagrammatic view of a control technology for the turbo-charging engine system of Figure 1; and
Figure 3 shows a variant of the turbo-charging engine system shown in Figure 1.

### Detailed Description

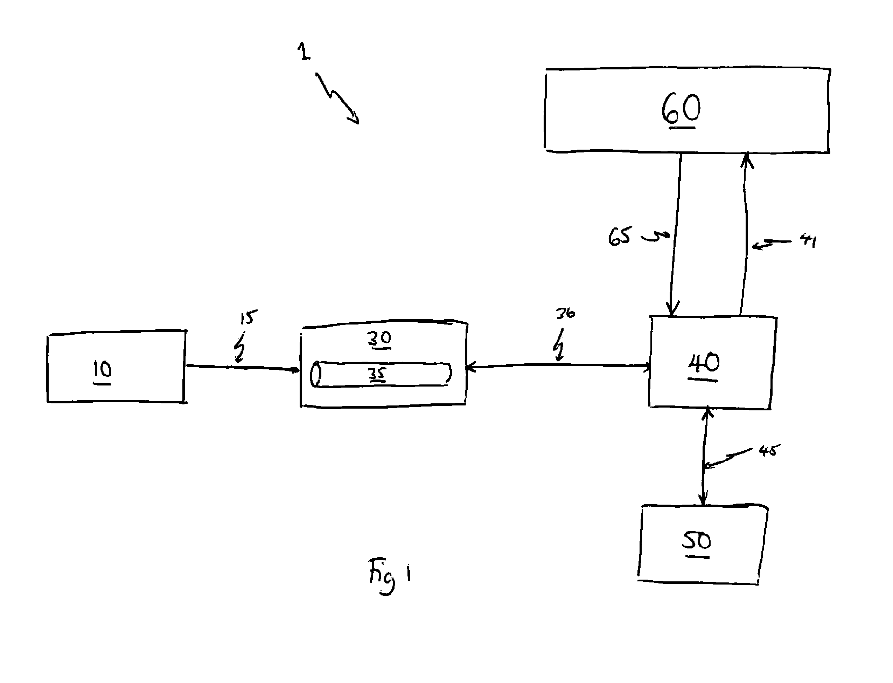

Referring to Figure 1, a schematic diagram illustrating a turbo-charging engine system 1 is shown. The turbo-charging engine system 1 may comprise: an engine device 10; a turbocharger device 30; a turbocharger electrical machine 40; an electrical energy storage system 50; and a controller 60. The turbocharger device 30 may comprise a turbocharger shaft 35.

The turbocharger device 30 may further comprise a turbine and compressor (not shown). As is well known, exhaust gas 15 from the engine 10 will pass through an exhaust manifold and across the turbine of the turbocharger 30 in exiting the engine. The turbine is driven by the exhaust gases and turns the turbocharger shaft 35 on which the compressor is mounted. The compressor is driven by the shaft 35 and compresses intake air delivered to the engine.

The turbocharger electrical machine 40 may normally be coupled to the turbocharger shaft 35, which is indicated by energy link 36. The turbocharger electrical machine 40 may be capable of operating in a first mode to generate electrical power (that is, as a generator or an alternator when driven by the turbocharger shaft 35) or in a second mode to consume electrical power and convert it to rotational (mechanical) power (that is, as a motor to drive the turbocharger shaft 35).

The turbocharger electrical machine 40 is usually incorporated with the turbocharger shaft 35. This may be accomplished by having the generator rotor windings (not shown) mounted on the shaft 35, with the stator windings (not shown) in a fixed position adjacent the shaft 35. When the turbocharger electrical machine 40 operates in its generating mode, the generated electrical power 45 may then be passed to the electrical energy storage system 50.

Switching the turbocharger electrical machine 40 from its first generating mode to its second motoring mode is governed by controller 60. This control is achieved using an indicator signal 41 and a control signal 65. The controller 60 receives the indicator signal 41 from turbocharger electrical machine 40. The indicator signal 41 typically indicates the power factor of the electrical power generated by or supplied to the turbocharger electrical machine 40.

As is commonly understood within this technical field, the power factor is a ratio of the real power flowing from or to the electrical machine to the apparent power at the electrical machine. Real power is the real part of the complex power in a reactive circuit. Apparent power is the product of the root-mean-squared current and voltage. Power factor may be determined using appropriate measuring instruments, such as voltage, current and power meters.

If the power factor for the electrical energy generated by the turbocharger electrical machine indicates that the load on the engine will increase, the second, motoring mode of the turbocharger electrical machine 40 is selected by adjusting the control signal 65 appropriately. This may advantageously be identified by an increase in the power factor.

The load on the engine is distinct from engine speed, as an engine can provide power to serve a load at different engine speeds, for example electric power generators (with a 4-pole alternator) will generate electricity at 50Hz running at 1500rpm or at 60Hz running at 1800rpm. The load may mean the power the engine has to generate to deliver the requirement.

Alternatively, if the power factor for the electrical energy at the turbocharger electrical machine indicates that the load on the engine will decrease, the first, generating mode of the turbocharger electrical machine 40 is selected by adjusting the control signal 65 appropriately. This is advantageously identified by a reduction in the power factor.

The removal of a large load from the engine device 10 would create a positive engine speed excursion, when engine speed would run higher than desired. Similarly, when the turbocharger shaft 35 has been spun up to a high speed (to create a greater charge of air into the inlet manifold of the engine device 10), the removal of the load would leave the turbocharger shaft 35 (and compressor wheel, which is not shown) spinning at a higher than desired speed before it would spin down to create the air flow required by a reduced fuelling to generate the now lower power requirement.

When the fuel delivered is reduced, surge can occur as there is now pressurised air in the air system of the engine device 10 which is not required for combustion. If this pressure is high enough, the pressurised air will flow backwards across the compressor of the turbocharger 30, causing it to stall and arrest motion of the shaft 35, which can damage the turbocharger 30. The power factor indicator signal 41 is used to predict this reduction in load, and the controller 60 causes the turbocharger electrical machine 40 to switch to its generating mode. In this mode, the turbocharger electrical machine 40 provides increased inertia to the turbocharger shaft 35 and thereby arrests the shaft 35. A smaller quantity of pressurised air is now produced, in line with the need. A reduction of the quantity of pressurised air in the system removes the opportunity for the compressor stall and surge to occur.

The indicator signal 41 in the turbocharger electrical machine 40 will indicate or detect the load increase sooner than a signal identifying the speed of the engine 10. Hence, using this power factor indicator signal 41 as a control system input signal, the turbocharger ETA device 40 can be switched to its motoring mode to improve air flow into the engine 10 and avoid the speed dip associated with using speed as a control system input.

This can be further understood by way of an example. The engine device 10, turbocharger 30, and turbocharger electrical machine 40 are all running at steady state. If a load is applied to the turbo-charged engine system 1 which requires a greater amount of energy to be produced, there will be an initial dip in the speed of the engine device 10 before the engine device 10 and turbocharger 30 ramp up to deliver the greater amount of energy. Existing systems measure the dip in the speed of the engine device 10, which would cause an increased fuelling rate to re-establish the speed before the dip for the engine. A higher speed of the turbocharger 30 is also caused as more fuel is being burned, so a greater air flow is required.

A turbocharger device 30 with a turbocharger electrical machine 40 addresses this problem. An extra load requirement is sensed by the power factor signal from the turbocharger electrical machine 40. When the load is applied, demanding more energy from the system, the change in load can be sensed through the power factor of the electrical signals generated by or supplied to the turbocharger electrical machine 40, before it is exhibited as a change in engine speed. Again, this may advantageously be identified by an increase in the power factor. This information can be used to change the mode of the turbocharger electrical machine 40 from generating electric energy to motoring the turbocharger 30.

From a performance point of view, this will reduce the size of dip in the system speed and also allow more air to be charged into the engine device 10, so that when the increased fuelling occurs, the air will be available to burn it fully from the start of this excursion, instead of waiting for the turbocharger 30 to spin up.

Advantageously, fuelling to the engine device 10 may also be adjusted on the basis of the power factor indicator signal 41. Consequently, when the indicator signal 41 shows an increase in power factor due to an increase in the load on the engine device 10, the fuel to the engine device 10 can be increased. Alternatively or additionally, when the indicator signal 41 shows an decrease in power factor due to a reduction in the load on the engine device 10, the fuel to the engine device 10 can be decreased. This would minimise engine speed excursions, as the engine would be provided with increased fuel before an increased load was fully applied to the engine and similarly would have reduced fuel intake as a load was removed.

The relationship between the power factor and the load on the engine device 10 may not be linear. Moreover, the relationship between the power factor and the engine speed is not necessarily linear. For example with a fixed speed application (such as a generator), the drop in engine speed when a load is applied will be proportional to the load, but not necessarily linear. The engine device 10 is non linear in its inherent behaviour subject to, for example, friction, limits on fuel and air. Hence, in an empirical experiment of applying load and monitoring the speed drop, some regions of the relationship between load and speed drop would be expected to be linear. However, the relationship would not be expected to be linear across the whole range, particularly for large loads that would create large speed excursions.

The switch between the motoring and generating modes of the turbocharger electrical machine 40 may be based on factors other than the power factor indicator signal 41. For example, the decision may also be based on a parameter that is a function of the altitude at which the engine is being operated, since operation of the turbocharger 30 and engine device 10 will vary according to altitude. This may be dealt with using mathematical functions, look-up tables or a 3D map in the control system, having fuelling, a parameter based on the altitude and power factor as its factors (or axes). Based on these factors, the desired speed of the turbocharger shaft 35 may be determined.

The parameter based on the altitude may be the actual altitude or an altitude relative to another absolute value. The physical input of altitude into the system could come from a GPS system. Alternatively, atmospheric pressure may be used, since it is a parameter based on the altitude. The atmospheric pressure may be provided by an open air pressure sensor, such as a barometric pressure sensor.

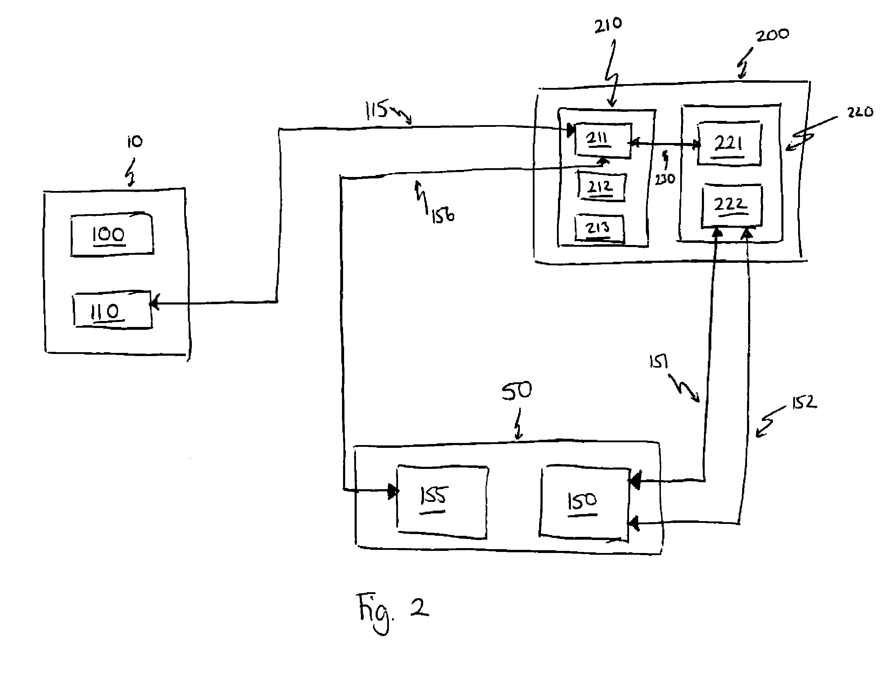

Referring next to Figure 2, there is shown a diagrammatic view of a control technology for the turbo-charging engine system of Figure 1. Where the same features are shown as in Figure 1, identical reference numerals have been used. The control technology comprises: the engine device 10; the electrical energy storage system 50; and the controls system 200. The controls system 200 may incorporate the features of the controller 60 shown in Figure 1.

The engine device 10 comprises: an engine 100; and an engine electronic control module (ECM) 110. The electrical energy storage system 50 comprises: a battery 150; and a battery energy storage controller 155. The controls system 200 comprises: a controls logic system 210; and a controls hardware system 220. The controls logic system 210 comprises: a supervisory control block 211; an ETA motoring control block 212; and an ETA generating control block 213. The controls hardware system 220 comprises: a processor 221; and electronics system 222.

The engine ECM 110 can communicate with the supervisory control block 211 to send and receive engine control variables over a first controller-area network (CAN) link 115, possibly using a CAN calibration protocol (CCP). The supervisory control block 211 also sends and receives energy control variables over a second CAN link 156, using CCP. The electronics system 222 and battery 150 communicate control signals over a third CAN link 152, using CCP. Electrical energy flows between the battery and the hardened electronics 222 over an energy link 151. Also, the supervisory control block 211 communicates with the processor 221 using a communications link 230.

The indicator signal 41 (shown in Figure 1) indicates the electrical load power factor signal is derived from the generator part of the turbocharger electrical machine 40. The indicator signal 31 can be communicated through the first CAN link 115. The generator is able to sense or be subject to a physical disturbance, reflecting a change in load before the engine or turbo can detect such a change. This occurs as the power factor signal will be modified before a change in the speed of the engine 100 or speed of the turbocharger.

The engine ECM 110 could also use the indicator signal 41 through the first CAN link 115 to determine when a fuelling increase should take place, based on a predicted decrease in speed due a decrease in the power factor when a load is applied.

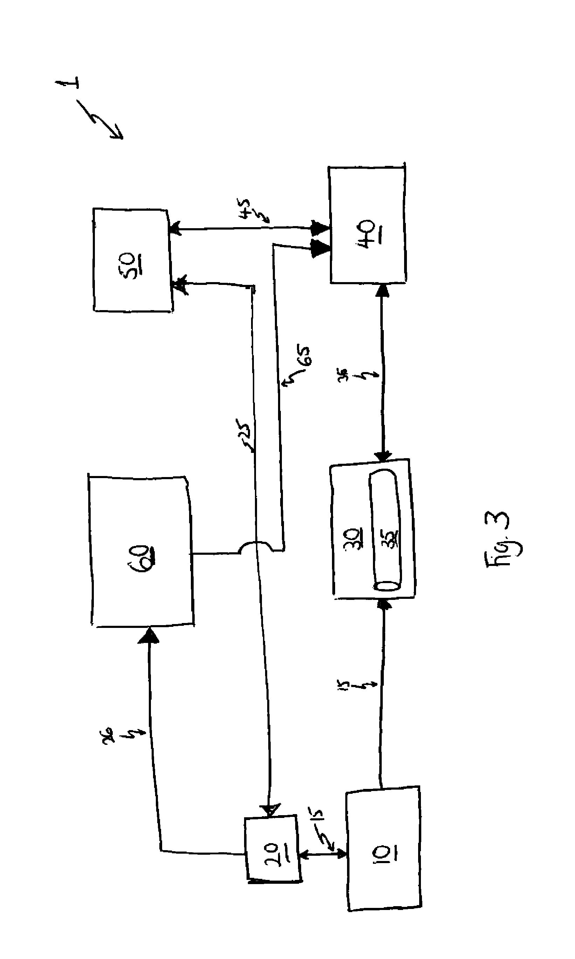

Referring now to Figure 3, there is shown a variant of the turbo-charging engine system shown in Figure 1. In this variant, the turbo-charging engine system 1 also comprises an engine electrical machine 20.

The engine electrical machine 20 may be driven by engine crankshaft. This is schematically illustrated by relationship 15. The engine electrical machine 20 may be arranged to generate electrical power. The generated electrical power 25 may then be passed to electrical energy storage system 50. The system is therefore being used as a generator set engine.

In one embodiment using this variant, a control system can be employed that uses the power factor from both the turbocharger electrical machine 40 and the engine electrical machine 20. For example, such a control scheme may apply a "first wins"-type logic. For example, if either the turbocharger electrical machine 40 or the engine electrical machine 20 indicate a decrease in engine speed, the turbocharger electrical machine 40 is switched to its second, motoring mode. In other words, the indication that the power factor is decreasing would behave as a master signal from a hierarchical point of view.

The turbocharger system comprising turbocharger 30, turbocharger electrical machine 40 and controller 60 described above can be used within an engine, such as a turbocompounding engine. The turbocharger 30 may form part of a turbocompounding or TC system in the engine. The engine can be used for a variety of industrial applications, such as vehicles and aircraft.

Although embodiments of the disclosure have been described above, the skilled person will contemplate various modifications. For example, the skilled person will recognise that various features of the turbocharged-engine system 1 are optional, such as engine electrical machine 20.

In some embodiments of the disclosure, a control system may be employed that uses the power factor from only the turbocharger electrical machine 40 or only the engine electrical machine 20. The control system using the power factor from only the turbocharger electrical machine 40 may be applied even when an engine electrical machine 20 is available.

Also, the skilled person will appreciate that the coupling between the turbocharger shaft 35 and the turbocharger electrical machine 40 can be different from that described above. For example, a rotor for the turbocharger electrical machine 40 can be mounted on a mechanism driven by the turbocharger shaft 35. Also, it will be understood that different communication protocols can be employed from those discussed above.

It will be appreciated that the processes described above can be implemented through a computer program. The computer program can be stored on a computer readable medium.

## Claims

1. A turbocharger system, comprising:
a turbocharger having a rotatable shaft arranged to be driven by exhaust gases from an associated engine and coupled to a turbocharger electrical machine; and
a controller configured to switch the turbocharger electrical machine between a first mode in which electrical energy is drawn from the turbocharger electrical machine acting as a generator and a second mode in which energy is provided to the turbocharger electrical machine to act as a motor, the controller being configured to switch between the first mode and the second mode based upon the power factor for the electrical energy generated by or supplied to the turbocharger electrical machine.

2. A turbocharger system, comprising:
an engine for driving a load, coupled to an engine electrical machine and arranged to provide exhaust gases;
a turbocharger having a rotatable shaft arranged to be driven by the exhaust gases and coupled to a turbocharger electrical machine; and
a controller configured to switch the turbocharger electrical machine between a first mode in which electrical energy is drawn from the turbocharger electrical machine acting as a generator and a second mode in which energy is provided to the turbocharger electrical machine to act as a motor, the controller being configured to switch between the first mode and the second mode based upon the power factor for the electrical energy generated by or supplied to at least one of: the engine electrical machine; and the turbocharger electrical machine.

3. The turbocharger system of claim 2, wherein the controller is configured to switch between the first mode and the second mode based upon a combination of the power factor for the electrical energy generated by or supplied to the engine electrical machine and the power factor for the electrical energy generated by or supplied to the turbocharger electrical machine.

4. The turbocharger system of claim 2 or claim 3, wherein the controller is configured to switch between the first mode and the second mode based upon a change in the power factor for the electrical energy generated by or supplied to the engine electrical machine or the turbocharger electrical machine.

5. The turbocharger system of any preceding claim, wherein the controller is configured to switch the turbocharger electrical machine to its second mode when the power factor increases.

6. The turbocharger system of claim 5, wherein the controller is further arranged to cause an increase in fuel input to the engine, when the power factor increases.

7. The turbocharger system of any one of claims 1 to 4, wherein the controller is configured to switch the turbocharger electrical machine to its first mode when the power factor decreases.

8. The turbocharger system of any preceding claim, wherein the controller is further configured to switch the turbocharger electrical machine between the first mode and the second mode based upon a parameter that is a function of altitude.

9. A method of operating a turbocharger having a rotatable shaft coupled to a turbocharger electrical machine, the method comprising:
switching between a first mode, in which the rotatable shaft of the turbocharger is driven to rotate, causing the turbocharger electrical machine to act as a generator, such that energy is drawn from the turbocharger electrical machine, and a second mode, in which the turbocharger electrical machine is operated such that energy is provided to the turbocharger electrical machine to act as a motor and drive the rotatable shaft, the switch between the first mode and the second mode being based upon the power factor for the electrical energy generated by or supplied to the turbocharger electrical machine.

10. A method of operating a turbocharger system comprising:
an engine for driving a load, the engine being coupled to an engine electrical machine; and a turbocharger having a rotatable shaft coupled to a turbocharger electrical machine; the method comprising:
operating the engine and generating exhaust gases thereby, which cause the turbocharger rotatable shaft to rotate; and
switching between a first mode, in which the rotatable shaft of the turbocharger is driven to rotate, causing the turbocharger electrical machine to act as a generator, such that energy is drawn from the turbocharger electrical machine, and a second mode, in which the turbocharger electrical machine is operated such that energy is provided to the turbocharger electrical machine to act as a motor and drive the rotatable shaft, the switch between the first mode and the second mode being based upon the power factor for the electrical energy generated by or supplied to at least one of: the engine electrical machine; and the turbocharger electrical machine.

11. The method of claim 9 or claim 10, wherein a switch from the first mode to the second mode is based on the power factor increasing.

12. The method of claim 11, wherein there is provided an engine for driving a load, the method further comprising:
increasing fuel input to the engine when the power factor increases.

13. The method of claim 9 or claim 10, wherein a switch from the second mode to the first mode is based on the power factor decreasing.

14. The method of any one of claims 9 to 13, further comprising:
determining a parameter that is a function of altitude;
and
wherein the switch between the first mode and the second mode is further based on the determined parameter.

15. A computer program operable to carry out the method of any one of claims 9 to 14.
